# FASCICULE DE BREVET EUROPEEN

(11) **EP 1 732 855 B1**
(45) Date de publication et mention de la délivrance du brevet: **07.05.2008**
(21) Numéro de dépôt: 05739436.3
(22) Date de dépôt: 14.03.2005
(51) Int. Cl.: C03C 3/091

(54) **FILS DE VERRE APTES A RENFORCER DES MATIERES ORGANIQUES ET/OU INORGANIQUES**
GLASGARN ZUR VERSTÄRKUNG VON ORGANISCHEN UND/ODER ANORGANISCHEN MATERIALIEN
GLASS YARN FOR REINFORCING ORGANIC AND/OR INORGANIC MATERIALS

(30) Priorité: 17.03.2004 FR 0402742
(43) Date de publication de la demande: 20.12.2006
(73) Titulaire: Saint-Gobain Technical Fabrics Europe, 73000 Chambéry (FR)
(72) Inventeur: CREUX, Sophie, 2584 CA Den Haag (NL); LECOMTE, Emmanuel, 93300 Bobigny (FR); BERTHEREAU, Anne, 73190 Challes Les Eaux (FR)
(74) Mandataire: Teyssedre, Laurent
(86) Numéro de dépôt international: PCT/FR2005/050161
(87) Numéro de publication internationale: WO 2005/093227

(56) Documents cités:
- WO-A-00/73231
- WO-A-00/73232
- WO-A-01/32576
- WO-A-02/20419
- WO-A-02/42233
- WO-A-99/01393
- WO-A-99/12858

## Description

La présente invention concerne des fils ou fibres de verres, notamment destinés au renforcement de matières organiques et/ou inorganiques et utilisables comme fils textiles, ces fils étant susceptibles d'être produits par un procédé consistant à étirer mécaniquement des filets de verre fondu s'écoulant d'orifices disposés à la base d'une filière généralement chauffée par effet Joule.

Elle concerne plus particulièrement des fils de verre présentant une composition nouvelle particulièrement avantageuse.

Le domaine des fils de verre de renforcement est un domaine particulier de l'industrie du verre. Ces fils sont élaborés à partir de compositions de verres spécifiques, le verre utilisé devant pouvoir être étiré sous forme de filaments de quelques micromètres de diamètre, suivant le procédé précédemment décrit, et devant permettre la formation de fils aptes à remplir notamment leur rôle de renfort. Les fils de verre de renforcement les plus couramment utilisés sont ainsi les fils formés de verres dont la composition dérive de la composition eutectique du diagramme ternaire SiO₂-Al₂O₃-CaO dont la température au liquidus est de 1170°C. Ces fils sont désignés sous le nom de fils de « verre E », dont l'archétype est décrit dans les publications de brevets US-A-2 334 981 et US-A-2 571 074, et qui présentent une composition essentiellement à base de silice, d'alumine, de chaux et d'anhydride borique. Ce dernier, présent à des teneurs allant en pratique de 5 à 13% dans les compositions de verres qualifiés de « verre E », est ajouté en remplacement de la silice afin de diminuer la température au liquidus du verre formé et de faciliter sa fusion. On nomme « température au liquidus », notée « T_{liq} », la température à laquelle apparaît, dans un système à l'équilibre thermodynamique, le cristal le plus réfractaire. La température au liquidus donne donc la limite inférieure à laquelle il est possible de fibrer.

Les fils de verre E se caractérisent en outre par une teneur en oxydes alcalins (essentiellement Na₂O et/ou K₂O) limitée.

Depuis les deux publications de brevet citées, les verres comprenant ces constituants ont fait l'objet de nombreuses modifications ayant pour but de réduire les émanations de produits susceptibles de polluer l'atmosphère, de réduire le coût de la composition en diminuant la teneur des constituants les plus onéreux, d'améliorer l'aptitude de ces verres au fibrage (le fibrage ou formage correspondant à l'opération d'étirage des filaments de verre à partir d'une filière selon le procédé précédemment évoqué), notamment en diminuant leur viscosité aux températures élevées ainsi que leur tendance à dévitrifier, ou enfin d'améliorer une propriété particulière destinée à accroître leurs performances (ou à les rendre aptes) pour certaines applications.

Des solutions pour réduire en grande partie les émanations polluantes ont consisté à supprimer des compositions les éléments les plus volatils que sont l'anhydride borique et le fluor. La diminution de la teneur en anhydride borique est également un moyen de réduction du coût des compositions. La suppression de l'anhydride borique et du fluor dans les compositions de ces verres est généralement faite au détriment de leur aptitude au fibrage, leur mise en oeuvre pour obtenir des fils de renforcement devenant généralement plus difficile ou délicate, obligeant éventuellement à des modifications des installations de fibrage existantes.

La publication US-A-3 847 626 décrit et revendique des compositions dans lesquelles ces éléments sont remplacés par de fortes teneurs en oxyde de titane, allant de 3 à 5%, et par la magnésie, pour des teneurs allant de 1,5 à 4%. Ces deux oxydes permettent de compenser l'absence de bore et de fluor en rendant aptes au fibrage les verres formés à partir de ces compositions. La coloration jaune conférée par de tels taux de titane tend toutefois à exclure ce type de compositions pour certaines applications. Des teneurs élevées en oxyde de titane, allant de 2 à 4%, sont également préconisées dans la publication US-A-4 026 715, cet élément étant généralement ajouté conjointement à des oxydes divalents tels que SrO, ZnO ou BaO, lesquels présentent en outre l'inconvénient d'être coûteux.

La publication US-A-4 199 364 décrit des compositions comprenant des teneurs élevées en oxyde de lithium. Outre son coût élevé, ce dernier fait partie des oxydes alcalins, connus pour dégrader l'aptitude des fibres au renforcement des supports de circuits électroniques.

Dans la demande WO 96/39362 sont décrites des compositions sans bore ni fluor, formées essentiellement à partir du système quaternaire SiO₂-Al₂O₃-CaO-MgO, contenant de faibles quantités d'oxyde de titane (moins de 0,9%) et généralement exemptes d'ajouts d'oxydes coûteux tels que ceux décrits dans les demandes précédemment citées. Ces verres présentent néanmoins une température au liquidus et une température de formage relativement élevées.

Dans le domaine des fils de verres obtenus par étirage mécanique de filets de verre fondu, on nomme « température de formage » la température pour laquelle le verre possède une viscosité de 1000 Poises (deciPascal seconde), viscosité autour de laquelle le verre doit être fibré. Cette température, notée « Tlog3 », correspond plus particulièrement à la température du verre au niveau des tétons de la filière. La température du verre à l'entrée de la filière correspond à une viscosité de l'ordre de 10^{2,5} poises, et elle est notée « Tlog2,5 ».

Afin d'éviter tout risque de dévitrification lors du formage, la « plage de fibrage », notée «ΔT» et définie comme la différence entre la température de formage et la température au liquidus, doit être positive, de préférence supérieure à 50°C.

Des valeurs élevées pour ces différentes températures obligent à maintenir le verre à des températures élevées à la fois pendant le conditionnement du verre et dans le dispositif de fibrage lui-même.

Cet inconvénient se traduit par un surcoût lié aux compléments d'apport thermique nécessaires pour conditionner le verre et à un renouvellement plus fréquent des outils de fibrage, notamment les pièces en platine, dont le vieillissement s'accélère fortement avec l'augmentation de la température.

Plus récemment, plusieurs demandes ont également présenté des compositions permettant d'obtenir des verres à faible coût, mais possédant des températures au liquidus et de formage proches de celles du verre E, permettant ainsi un fibrage plus aisé.

Ainsi, les publications de brevet WO 99/12858 et WO 99/01393 décrivent des compositions de verre contenant de faibles quantités de fluor ou d'oxyde de bore. Dans WO 00/73232, la baisse des températures caractéristiques est obtenue par des compositions à faible teneur en MgO (moins de 1 %) et l'ajout d'une certaine quantité d'oxyde de bore, ou d'oxyde de lithium, ou d'oxyde de zinc, ou encore d'oxyde de manganèse, ce qui amoindrit l'intérêt économique de ces compositions. WO 00/73231 divulgue des compositions dont la température au liquidus est abaissée, notamment grâce à l'ajout de MgO dans une gamme de teneurs étroite, entre 1,7 et 2,6%. La plupart des compositions exemplifiées dans cette demande comprennent en outre un oxyde choisi parmi l'oxyde de bore, l'oxyde de lithium, l'oxyde de zinc, ou encore l'oxyde de manganèse. La diminution des températures caractéristiques du procédé peut encore être atteinte, dans WO 01/32576, par les faibles teneurs en silice (moins de 58%) des compositions, et dans WO 02/20419, par la sélection de compositions dont le rapport entre la teneur en silice et la teneur en alcalino-terreux est inférieure à 2,35.

Les buts poursuivis par les différentes inventions mentionnées étaient principalement de réduire le coût des compositions et de diminuer les envols de matières nocives pour l'environnement. L'utilisation des fibres pour certaines applications a également dicté le choix de compositions très spécifiques. Trois propriétés peuvent être ainsi particulièrement recherchées : la résistance en milieu acide, la résistance aux températures élevées, et la haute résistance mécanique, notamment la résistance à la traction des fibres. La première propriété est particulièrement souhaitée dans les applications de renforcement de matières organiques et/ou inorganiques soumises à un contact avec un milieu acide, par exemple dans l'industrie chimique. La deuxième propriété est d'un intérêt primordial lorsque les fils de verre sont utilisés par exemple dans les pots d'échappement de véhicules automobiles. La troisième propriété est recherchée quant à elle lorsque les matériaux renforcés par les fils de verre sont soumis à de fortes sollicitations mécaniques.

Pour chacune de ces trois propriétés, des compositions particulières ont été développées.

Les publications WO 03/050049 et WO 02/42233 décrivent des fibres de verre que leur composition rend apte à être employées dans les pots d'échappement d'automobile. Dans la première demande, le but est atteint grâce à une composition de verre contenant de très faibles quantités de MgO (moins de 1%). Ces verres contiennent également de fortes teneurs en oxyde de titane (au moins 1,5%). La deuxième demande décrit des compositions de verre contenant une plage de teneurs en oxydes alcalino-terreux particulière. Beaucoup d'exemples de cette demande sont des verres qui contiennent de l'oxyde de baryum ou de l'oxyde de strontium. Le document FR-A-2 804 107 décrit quant à lui des fibres présentant une composition particulière, dont la propriété de résistance aux températures élevées provient d'un traitement de leur surface visant à obtenir une composition superficielle extrêmement enrichie en silice.

La demande FR-A-2 692 248 décrit et revendique des compositions de verre présentant un comportement à la fusion et au fibrage proches de celui du « verre E », mais possédant une résistance aux acides nettement supérieure, notamment grâce à la diminution des teneurs en anhydride borique et en alumine. Les verres revendiqués possèdent néanmoins une teneur en anhydride borique encore supérieure à 2%.

Les exemples précédents montrent que des compositions spécifiques ont été développées pour répondre à certaines contraintes techniques, économiques ou environnementales, mais que l'optimisation d'une unique gamme de compositions permettant de répondre à l'ensemble de ces contraintes, fortement souhaitable sur le plan industriel, reste à faire.

La présente invention a ainsi pour but de proposer des compositions de verre d'un coût avantageusement bas, présentant une bonne aptitude au formage, et permettant d'obtenir des fils de verres dont les propriétés de résistance aux températures élevées et aux milieux acides, et de résistance mécanique sont significativement améliorées par rapport à celles du verre E et/ou similaires à certains verres actuellement commercialisés tout en présentant une meilleure aptitude au formage.

Un autre but de l'invention est de proposer des compositions de verre occasionnant peu d'envols préjudiciables à l'environnement lors de leur fusion.

Ces buts sont atteints grâce à des fils de verre dont la composition comprend les constituants suivants dans les limites définies ci-après exprimées en pourcentages pondéraux :

| | |
|---|---|
| SiO₂ | 59 à 63 |
| Al₂O₃ | 10 à 16 |
| CaO | 16 à 23 |
| MgO | 1 à 3 |
| Na₂O + K₂O + Li₂O | 0 à 2 |
| TiO₂ | 0 à1 |
| B₂O₃ | 0,1 à 1,8 |
| Li₂O | 0 à 0,5 |
| ZnO | 0 à 1 |
| MnO | 0 à 1 |
| F | 0 à 0,5 |

La silice est un oxyde formateur du réseau vitreux, et joue un rôle essentiel pour sa stabilité. Dans le cadre des limites définies précédemment, lorsque le pourcentage de ce constituant est inférieur à 59%, le verre obtenu n'est pas assez visqueux et dévitrifie trop facilement lors du fibrage. Pour des teneurs supérieures à 63%, le verre devient très visqueux et difficile à fondre. De ce fait, la teneur en silice est de préférence inférieure à 62,5%, et de façon particulièrement préférée, inférieure à 62%. La silice jouant un rôle bénéfique essentiel dans la résistance à la corrosion en milieu acide, sa teneur est de préférence supérieure à 60%, notamment supérieure ou égale à 60,5%, et même à 61%. Un compromis particulièrement préféré consiste à choisir une teneur en silice comprise entre 60 et 61%.

L'alumine constitue également un formateur du réseau des verres selon l'invention et joue un rôle fondamental dans leur stabilité. Dans le cadre des limites définies selon l'invention, une teneur inférieure à 10% entraîne une augmentation sensible de l'attaque hydrolytique du verre tandis que l'augmentation du pourcentage de cet oxyde au dessus de 16% entraîne des risques de dévitrification et une augmentation de la viscosité. Compte tenu de son rôle néfaste sur les propriétés de corrosion en milieu acide, la teneur en alumine est de préférence maintenue en dessous de 15%, voire de 14%. Les plus fortes résistances à la dévitrification s'obtiennent pour des teneurs en alumine comprises entre 11 et 14%, de préférence entre 12 et 13%.

La chaux et la magnésie permettent de régler la viscosité et de contrôler la dévitrification des verres selon l'invention. Dans le cadre des limites définies selon l'invention, une teneur en CaO supérieure ou égale à 23% engendre une augmentation des vitesses de dévitrification en CaSiO₃ (wollastonite) préjudiciable à un bon fibrage. La teneur en CaO doit donc être maintenue à un valeur strictement inférieure à 23%. Une teneur en CaO inférieure à 16% entraîne de trop faibles résistances hydrolytiques. La teneur en CaO est donc de préférence supérieure à 18%, et même à 20%. La teneur en MgO permet, en relation avec la teneur en chaux, d'obtenir des verres dont les températures au liquidus sont particulièrement basses. L'ajout de magnésie dans des teneurs déterminées permet en effet d'introduire une compétition entre les croissances des cristaux de wollastonite et de diopside (CaMgSi₂O₆), ayant pour effet de ralentir la croissance de ces deux cristaux, et donc de conférer une bonne résistance à la dévitrification. La teneur en MgO est supérieure à 1%. Le taux de MgO est également maintenu de préférence inférieur ou égal à 3%, supérieur à 2%, et notamment supérieur ou égal à 2,2%, voire à 2,6%. Pour des teneurs supérieures à 3%, la vitesse de cristallisation du diopside est trop intense. Pour cette raison, la teneur en MgO des verres selon l'invention est inférieure ou égale à 3%.

Les oxydes alcalins peuvent être introduits dans les compositions des fils de verre selon l'invention pour limiter la dévitrification et réduire la viscosité du verre. La teneur en oxydes alcalins doit cependant rester Inférieure à 2% pour éviter une augmentation de la conductivité électrique inacceptable pour les applications dans le domaine de l'électronique et pour éviter une diminution pénalisante de la résistance hydrolytique du verre. La teneur en lithium doit notamment être maintenue en-dessous de 0,5%, et de préférence inférieure à 0,1%. Les inventeurs ont mis en évidence le rôle extrêmement néfaste des oxydes alcalins dans la résistance aux températures élevées, caractérisée notamment par leur température de ramollissement. Ce rôle est connu de manière générale, mais dans ce contexte particulier, l'influence sur la diminution des températures caractéristiques du ramollissement du verre due à de très faibles teneurs en oxydes alcalins s'est révélée étonnamment élevée. La teneur totale en oxydes alcalins est donc de préférence inférieure ou égale à 1,5% ou même à 1%.

TiO₂ joue un rôle important dans les verres selon l'invention. Cet oxyde est connu comme agent fluidifiant du verre et susceptible de diminuer la température au liquidus, et par là-même substituant partiel de l'oxyde de bore. Au-delà de 1%, la coloration jaune et le surcoût qu'il génère peuvent devenir inacceptables pour certaines applications. L'absorption ultraviolette due aux fortes teneurs en titane peut également être rédhibitoire lorsque les fibres sont destinées au renfort de polymères dont la réticulation est réalisée au moyen de rayonnements UV. Pour ces différentes raisons, la teneur en oxyde de titane des verres selon l'invention est inférieure à 1%, et de préférence inférieure ou égale à 0,9%, et même à 0,8%. Afin de bénéficier des avantages procurés par la présence de l'oxyde de titane, sa teneur est de préférence supérieure ou égale à 0,5%.

L'anhydride borique B₂O₃ est ajouté à la composition des verres selon l'invention, dans une teneur supérieure à 0,1%, afin de faciliter la fusion et le formage des verres. Du bore peut en effet être introduit en quantité modérée et de manière économique par l'incorporation, comme matière première, de déchets de fils de verre contenant du bore, par exemple des déchets de fils de verre E. Un autre moyen économique d'introduction de faibles quantités de bore consiste à utiliser des matières premières naturelles apportant de l'oxyde de bore et des oxydes alcalins, telles que, par exemple, le borax (de formule chimique Na₂B₄O₇.5H₂O). Ces matières premières apportant du sodium, et compte tenu de la limitation de la teneur totale en oxydes alcalins qui est souhaitée, la teneur en oxyde de bore des verres selon l'invention est strictement inférieure à 1,8%. Les inventeurs ont cependant mis en évidence son rôle néfaste sur les propriétés de résistance à la corrosion en milieu acide et de résistance aux températures élevées. La teneur en B₂O₃ est donc de préférence inférieure à 1,5%, et de manière encore plus préférée inférieure à 1,1%. Il a cependant été découvert que de faibles teneurs en oxyde de bore, particulièrement bénéfiques à la fusion et au formage des verres selon l'invention, ne dégradaient pas de manière très notable les propriétés susmentionnées. Une teneur minimale égale à 0,5% en oxyde de bore est donc préférée dans les verres selon l'invention. Lorsque la teneur en B₂O₃ est supérieure ou égale à 0,5% et la teneur en TiO₂ est inférieure à 0,5%, il est souhaitable que la teneur en SiO₂ soit supérieure à 60,5% afin de conserver de bonnes propriétés de résistance à la corrosion en milieu acide.

L'oxyde de zinc (ZnO) permet de diminuer la viscosité des verres selon l'invention et d'augmenter leur résistance à la corrosion en milieu acide. Toutefois, compte tenu du prix élevé de cet oxyde, sa teneur est inférieure à 0,4%, de préférence inférieure à 0,1%.

La teneur en oxyde de manganèse est inférieure à 1%, et de préférence inférieure à 0,3%. Cet oxyde étant susceptible de conférer au verre une coloration violette très intense, le taux de MnO est maintenu de préférence inférieur à 0,1 %.

Du fluor peut être ajouté en faible quantité pour améliorer la fusion du verre, ou être présent à l'état d'impureté. Il a toutefois été découvert que de faibles quantités de fluor affectaient très nettement la tenue en température des verres selon l'invention. La teneur en fluor est donc avantageusement maintenue en-dessous de 0,5%, et notamment inférieure à 0,1%.

L'oxyde de fer est une impureté inévitable des verres selon l'invention du fait de sa présence dans plusieurs matières premières, et sa teneur est généralement inférieure à 0,5%. Etant donné que l'effet de coloration généralement attribué au titane est en fait dû à un transfert électronique entre les ions Fe²⁺ et Ti⁴⁺, la teneur en fer dans les verres selon l'invention est avantageusement inférieure à 0,3%, notamment à 0,2%, grâce à un choix judicieux des matières premières.

Un ou plusieurs autres composants (différents de ceux déjà considérés, c'est-à-dire différents de SiO₂, Al₂O₃, CaO, MgO, Na₂O, K₂O, Li₂O, B₂O₃, TiO₂, F, Fe₂O₃, ZnO, MnO) peuvent également être présents, généralement à titre d'impuretés, dans la composition selon l'invention, la teneur totale en ces autres composants restant inférieure à 1%, de préférence inférieure à 0,5%, le taux de chacun de ces autres composants n'excédant pas généralement 0,5%.

Les fils de verre selon l'invention peuvent être réalisés et mis en oeuvre comme les fils de verre E ; ils sont en outre plus économiques, et présentent une meilleure résistance en température, à la corrosion en milieu acide, et à la traction.

Les fils de verre selon l'invention sont obtenus à partir des verres de composition précédemment décrite selon le procédé suivant : une multiplicité de filets de verre fondu, s'écoulant d'une multiplicité d'orifices dispersés à la base d'une ou plusieurs filières est étirée sous la forme d'une ou plusieurs nappes de filaments continus, puis rassemblée en un ou plusieurs fils collectés sur un support en mouvement. Il peut s'agir d'un support en rotation lorsque les fils sont collectés sous forme d'enroulements ou d'un support en translation lorsque les fils sont coupés par un organe servant également à les étirer ou lorsque les fils sont projetés par un organe servant à les étirer de façon à former un mat.

Les fils obtenus, éventuellement après d'autres opérations de transformation, peuvent ainsi se présenter sous différentes formes : fils continus, fils coupés, tresses, rubans, mats, réseaux..., ces fils étant composés de filaments de diamètre pouvant aller de 5 à 30 microns environ.

Le verre fondu alimentant les filières est obtenu à partir de matières premières éventuellement pures (par exemple issues de l'industrie chimique) mais le plus souvent naturelles, ces dernières comprenant parfois des impuretés à l'état de traces, ces matières premières étant mélangées dans des proportions appropriées pour obtenir la composition désirée, puis étant fondues. La température du verre fondu (et donc sa viscosité) est réglée de façon traditionnelle par l'opérateur de façon à permettre le fibrage du verre en évitant notamment les problèmes de dévitrification et de façon à obtenir la meilleure qualité possible des fils de verre. Avant leur rassemblement sous forme de fils, les filaments sont généralement revêtus d'une composition d'ensimage permettant de les protéger de l'abrasion et facilitant leur association ultérieure avec des matières à renforcer.

Les composites obtenus à partir des fils selon l'invention comprennent au moins une matière organique et/ou au moins une matière inorganique et des fils de verre, une partie au moins des fils étant les fils de verre selon l'invention.

Eventuellement, les fils de verre selon l'invention peuvent déjà avoir été associés, par exemple en cours d'étirage, à des filaments de matière organique de façon à obtenir des fils composites. Par extension, par « fils de verre dont la composition comprend... », on entend selon l'invention des « fils formés à partir de filaments de verre dont la composition comprend... », les filaments de verre étant éventuellement associés à des filaments organiques avant le rassemblement des filaments en fils.

Compte tenu de leurs bonnes propriétés de résistance aux températures élevées, les fils de verre selon l'invention peuvent également être utilisés pour la garniture de pots d'échappement de véhicules automobiles. Dans cette application particulière, les fils de verre selon l'invention confèrent de bonnes propriétés d'isolation phonique, mais sont également soumis à des températures qui peuvent dépasser 850°C ou même 900°C.

Les avantages présentés par les fils de verre selon l'invention seront mieux appréciés à travers les exemples suivants, illustrant la présente invention sans toutefois la limiter.

Le tableau 1 rassemble cinq exemples selon l'invention numérotés de 1 à 5, et trois exemples comparatifs, numérotés C1 à C3. C1 est une composition de verre « E » standard, C2 une composition issue de la demande de brevet WO 99/12858, C3 étant quant à elle comprise dans l'enseignement de la demande WO 96/39362.

La composition des verres est exprimée en pourcentages massiques d'oxydes.

Afin d'illustrer les avantages des compositions de verre selon l'invention, le tableau 1 présente quatre propriétés fondamentales :
- la température correspondant à une viscosité de 10^{2,5} poises, notée « Tlog2,5 » et exprimée en degrés Celsius, proche de la température du verre dans la filière,
- la différence entre cette dernière et la température au liquidus (exprimée « Tliq »), qui représente une marge de formage devant être la plus élevée possible,
- la température de ramollissement, dite « de Littleton » et correspondant à une viscosité de 10^{7,6} poises, notée « Tlog7,6 » et exprimée en degrés Celsius, valeur indicative de la résistance en température des fibres, ces deux valeurs de température et leur méthode de mesure respective étant bien connues de l'homme du métier,
- la valeur de la contrainte à la rupture en flexion trois points de composites à base de résine vinyl-ester (commercialisée par la société Dow Chemical Company sous le nom Derakane 411-350) comprenant une proportion volumique de fibres de 50% après immersion dans une solution d'acide chlorhydrique (HCl concentration 1N) à température ambiante pendant 100 heures. Cette contrainte est exprimée en MPa et caractérise la résistance des fibres à la corrosion en milieu acide.

**Tableau 1**

| | **C1** | **C2** | **C3** | **1** | **2** | **3** | **4** | **5** |
|---|---|---|---|---|---|---|---|---|
| **SiO₂** | 54,4 | 59,7 | 60,1 | 60,1 | 60,9 | 60,9 | 60,2 | 60,2 |
| **Al₂O₃** | 14,5 | 13,2 | 12,8 | 13,0 | 12,2 | 12,2 | 12,5 | 12,7 |
| CaO | 22,1 | 22,2 | 23,1 | 22,0 | 22,2 | 21,9 | 22,0 | 22,0 |
| **B₂O₃** | 7,3 | - | - | 0,7 | 1,0 | 1,5 | 1,0 | 0,5 |
| **Na₂O** | 0,5 | 0,9 | 0,3 | 0,4 | 0,4 | 0,4 | 0,4 | 0,4 |
| **MgO** | 0,25 | 2,4 | 3,3 | 3,1 | 2,6 | 2,4 | 2,4 | 3,0 |
| **TiO₂** | 0,1 | - | - | - | - | - | 0,8 | 0,5 |
| **K₂O** | 0,35 | 0,4 | 0,2 | 0,4 | 0,4 | 0,4 | 0,4 | 0,4 |
| **F** | - | 0,9 | - | - | - | - | - | - |
| | | | | | | | | |
| **Tlog2,5 (°C)** | 1285 | 1341 | 1350 | 1356 | 1359 | 1360 | 1358 | 1357 |
| **Tlog2,5-Tlig(°C)** | 205 | 161 | 150 | 185 | 175 | 185 | 195 | 175 |
| **Tlog7,6 (°C)** | 836 | 881 | 920 | 916 | 920 | 918 | 923 | 923 |
| **Contrainte à rupture (Mpa)** | 200 | 420 | 550 | 500 | 545 | 540 | 550 | 540 |

Comme indiqué dans le tableau 1, les fibres selon l'invention sont très nettement supérieures aux fibres de verre E (ex. comparatif C1) en termes de tenue en température (près de 100°C de différence) et de résistance à la corrosion en milieu acide (une contrainte à rupture au moins deux à trois fois plus élevée).

Les fibres selon l'invention présentent des performances d'usage assez comparables à celles de l'exemple C3, mais ont l'avantage d'avoir des conditions de fibrage améliorées, puisque la marge de formage est nettement plus confortable (au moins 25°C de plus) et s'approche même des conditions du verre E, ce grâce à l'ajout modéré d'anhydride borique. Les fibres selon l'invention sont en tout point supérieures aux fibres de l'exemple comparatif C2.

Les exemples 1, 2 et 3 illustrent l'influence de certains oxydes sur la résistance des fibres à la corrosion en milieu acide. L'exemple 2 illustre par exemple en comparaison avec l'exemple 1 le rôle bénéfique de SiO₂ et préjudiciable de Al₂O₃, tandis que l'exemple 3 met en évidence par rapport à l'exemple 2 l'influence néfaste de l'oxyde de bore.

Les exemples 4 et 5 contiennent de l'oxyde de titane TiO₂. La comparaison des exemples 4 et 2 permet de mettre en évidence le rôle bénéfique de cet oxyde sur la tenue en température, mais également sur la résistance à la corrosion acide, puisque cette dernière est améliorée malgré la plus forte teneur en Al₂O₃ et la plus faible teneur en SiO₂ dans l'exemple 4.

Les verres selon l'invention présentent donc une optimisation particulièrement bonne des propriétés de résistance en température et à la corrosion en milieu acide et des propriétés de fibrage.

## Revendications

1. Fil de verre **caractérisé en ce que** sa composition comprend les constituants suivants, dans les limites définies ci-après exprimées en pourcentages pondéraux :
| | |
|---|---|
| SiO₂ | 59 à 63 |
| Al₂O₃ | 10 à 16 |
| CaO | 16 à 23 |
| MgO | 1 à 3 |
| Na₂O + K₂O + Li₂O | 0 à 2 |
| TiO₂ | 0 à 1 |
| B₂O₃ | 0,1 à moins de 1,8 |
| Li₂O | 0 à 0,5 |
| ZnO | 0 à 0,5 |
| MnO | 0 à 1 |
| F | 0 à 0,5 |

2. Fil de verre selon la revendication 1, formé à partir d'un bain de verre obtenu par fusion d'un mélange vitrifiable **caractérisé en ce que** ledit mélange vitrifiable comprend du borax.

3. Fil de verre selon l'une des revendications précédentes, **caractérisé en ce que** la teneur en TiO₂ est supérieure ou égale à 0,5%.

4. Fil de verre selon la revendication 1 ou 2, **caractérisé en ce que** la teneur en B₂O₃ est supérieure ou égale à 0,5%.

5. Fil de verre selon la revendication 4, **caractérisé en ce que** lorsque la teneur en TiO₂ est inférieure ou égale à 0,5%, la teneur en SiO₂ est supérieure à 60,5%.

6. Fil de verre selon l'une des revendications précédentes, **caractérisé en ce que** la teneur en MgO est supérieure ou égale à 2,2%.

7. Composite de fils de verre et de matière(s) organique(s) et/ou inorganique(s) **caractérisé en ce qu'**il comprend des fils de verre tels que définis dans l'une des revendications 1 à 6.

8. Garniture pour pot d'échappement **caractérisée en ce qu'**elle comprend des fibres telles que définies dans l'une des revendications 1 à 6.

9. Composition de verre adaptée à la réalisation de fibres de verre de renforcement comprenant les constituants suivants, dans les imites définies ci-après exprimées en pourcentages pondéraux :
| | |
|---|---|
| SiO₂ | 59 à 63 |
| Al₂O₃ | 10 à 16 |
| CaO | 16 à 23 |
| MgO | 1 à 3 |
| Na₂O + K₂O + Li₂O | 0 à 2 |
| TiO₂ | 0 à 1 |
| B₂O₃ | 0,1 à moins de 1,8 |
| Li₂O | 0 à 0,5 |
| ZnO | 0 à 0,5 |
| MnO | 0 à 1 |
| F | 0 à 0,5 |

10. Procédé de fabrication de fils de verre, comprenant les étapes d'étirage sous la forme d'une ou plusieurs nappes de filaments continus d'une multiplicité de filets de verre fondus s'écoulant d'une multiplicité d'orifices disposés à la base d'une ou plusieurs filières, et d'assemblage desdits filaments en un ou plusieurs fils collectés sur un support en mouvement, le verre fondu alimentant les filières présentant une composition selon la revendication 9.

## Claims

1. Glass strand, **characterized in that** its composition comprises the following constituents in the limits defined below, expressed as percentages by weight:
| | |
|---|---|
| SiO₂ | 59 to 63 |
| Al₂O₃ | 10 to 16 |
| CaO | 16 to 23 |
| MgO | 1 to 3 |
| Na₂O + K₂O + Li₂O | 0 to 2 |
| TiO₂ | 0 to 1 |
| B₂O₃ | 0.1 to less than 1.8 |
| Li₂O | 0 to 0.5 |
| ZnO | 0 to 0.5 |
| MnO | 0 to 1 |
| F | 0 to 0.5. |

2. Glass strand according to Claim 1, formed from a glass melt obtained by melting a batch **characterized in that** the said batch includes borax.

3. Glass strand according to one of the preceding claims, **characterized in that** the TiO₂ content is greater than or equal to 0.5%.

4. Glass strand according to Claim 1 or 2,
**characterized in that** the B₂O₃ content is greater than or equal to 0.5%.

5. Glass strand according to Claim 4, **characterized in that**, when the TiO₂ content is less than or equal to 0.5%, the SiO₂ content is greater than 60.5%.

6. Glass strand according to one of the preceding claims, **characterized in that** the MgO content is greater than or equal to 2.2%.

7. Composite, consisting of glass strands and organic and/or inorganic material(s), **characterized in that** it comprises glass strands as defined in one of Claims 1 to 6.

8. Fitting for an exhaust system, **characterized in that** it comprises fibres as defined in one of Claims 1 to 6.

9. Glass composition suitable for producing glass reinforcement fibres, which comprises the following constituents in the limits defined below, expressed as percentages by weight:
| | |
|---|---|
| SiO₂ | 59 to 63 |
| Al₂O₃ | 10 to 16 |
| CaO | 16 to 23 |
| MgO | 1 to 3 |
| Na₂O + K₂O + Li₂O | 0 to 2 |
| TiO₂ | 0 to 1 |
| B₂O₃ | 0.1 to less than 1.8 |
| Li₂O | 0 to 0.5 |
| ZnO | 0 to 0.5 |
| MnO | 0 to 1 |
| F | 0 to 0.5. |

10. Process for manufacturing glass strands, comprising the steps of attenuation into the form of one or more webs of continuous filaments from a multiplicity of molten glass streams emanating from a multiplicity of orifices placed at the base of one or more bushings, and of assembling the said filaments into one or more strands that are collected on a moving support, the molten glass feeding the bushings having a composition according to Claim 9.

## Patentansprüche

1. Glasfaden, **dadurch gekennzeichnet, dass** seine Zusammensetzung folgende Bestandteile innerhalb nachstehender in prozentualen Gewichtsanteilen angegebenen Grenzen umfasst:
| | |
|---|---|
| SiO₂ | 59 bis 63 |
| Al₂O₃ | 10 bis 16 |
| CaO | 16 bis 23 |
| MgO | 1 bis 3 |
| Na₂O + K₂O + Li₂O | 0 bis 2 |
| TiO₂ | 0 bis 1 |
| B₂O₃ | 0,1 bis weniger als 1,8 |
| Li₂O | 0 bis 0,5 |
| ZnO | 0 bis 0,5 |
| MnO | 0 bis 1 |
| F | 0 bis 0,5. |

2. Glasfaden nach Anspruch 1, der ausgehend von einer Glasschmelze, die durch Schmelzen eines Glasrohstoffgemischs erhalten worden ist, gebildet ist, **dadurch gekennzeichnet, dass** das Glasrohstoffgemisch Borax enthält.

3. Glasfaden nach einem der vorhergehenden Ansprüche, **dadurch gekennzeichnet, dass** der TiO₂-Gehalt mehr als oder gleich 0,5 % beträgt.

4. Glasfaden nach Anspruch 1 oder 2, **dadurch gekennzeichnet, dass** der B₂O₃-Gehalt mehr als oder gleich 0,5 % beträgt.

5. Glasfaden nach Anspruch 4, **dadurch gekennzeichnet, dass**, wenn der TiO₂-Gehalt weniger als oder gleich 0,5 % beträgt, der SiO₂-Gehalt mehr als 60,5 % beträgt.

6. Glasfaden nach einem der vorhergehenden Ansprüche, **dadurch gekennzeichnet, dass** der MgO-Gehalt mehr als oder gleich 2,2 % beträgt.

7. Verbundmaterial aus Glasfäden und einem oder mehreren organischen und/oder anorganischen Materialien, **dadurch gekennzeichnet, dass** es in einem der Ansprüche 1 bis 6 definierte Glasfäden umfasst.

8. Auskleidung für Auspufftöpfe, **dadurch gekennzeichnet, dass** sie in einem der Ansprüche 1 bis 6 definierte Fäden umfasst.

9. Glaszusammensetzung, die für die Herstellung verstärkender Glasfäden geeignet ist und folgende Bestandteile innerhalb nachstehender in prozentualen Gewichtsanteilen angegebenen Grenzen umfasst:
| | |
|---|---|
| SiO₂ | 59 bis 63 |
| Al₂O₃ | 10 bis 16 |
| CaO | 16 bis 23 |
| MgO | 1 bis 3 |
| Na₂O + K₂O + Li₂O | 0 bis 2 |
| TiO₂ | 0 bis 1 |
| B₂O₃ | 0,1 bis weniger als 1,8 |
| Li₂O | 0 bis 0,5 |
| ZnO | 0 bis 0,5 |
| MnO | 0 bis 1 |
| F | 0 bis 0,5. |

10. Verfahren zur Herstellung von Glasfäden, das die Stufen Ziehen einer Vielzahl von Glasstrahlen, die aus einer Vielzahl von im Boden einer oder mehrerer Spinndüsen angeordneten Öffnungen fließen, zur Form einer oder mehrerer Bahnen aus endlosen Filamenten und Verbinden dieser Filamente zu einem oder mehreren Fäden, der (die) auf einem sich bewegenden Träger gesammelt wird (werden), umfasst, wobei die Glasschmelze, die den Spinndüsen zugeführt wird, die Zusammensetzung nach Anspruch 9 besitzt.
